# EUROPEAN PATENT SPECIFICATION

(11) **EP 3 901 530 B1**
(45) Date of publication and mention of the grant of the patent: **23.08.2023**
(21) Application number: 20171306.2
(22) Date of filing: 24.04.2020
(51) Int. Cl.: F24F 11/36, F25B 49/02, F24F 11/89, F25B 49/00, G01M 3/22

(54) **REFRIGERANT LEAKAGE DETECTION SENSOR FOR A HEAT PUMP AND AIR CONDITIONING APPARATUS INCLUDING SAME**
KÄLTEMITTELLECKAGE-ERKENNUNGSSENSOR FÜR EINE WÄRMEPUMPE UND KLIMAANLAGE MIT EINEM SOLCHEN SENSOR
CAPTEUR DE DÉTECTION DE FUITE DE RÉFRIGÉRANT POUR UNE POMPE À CHALEUR ET APPAREIL DE CONDITIONNEMENT D'AIR LE COMPRENANT

(43) Date of publication of application: 27.10.2021
(73) Proprietor: DAIKIN INDUSTRIES, LTD., Osaka-Shi, Osaka 530-0001 (JP); Daikin Europe N.V., 8400 Oostende (BE)
(72) Inventor: Petele, Jan, 301 00 Plzen, Skvmany (CZ); Cesky, Josef, 301 00 Plzen, Skvmany (CZ); Trykar, Michal, 301 00 Plzen, Skvmany (CZ)
(74) Representative: Hoffmann Eitle

(56) References cited:
- EP-A1- 3 214 386
- WO-A1-2019/013049
- JP-A- 2007 071 604
- JP-B2- 3 587 326

## Description

### TECHNICAL FIELD

The present disclosure relates to a refrigerant leakage detection sensor for a heat pump.

Moreover, the disclosure relates to an air conditioning apparatus, in particular an indoor unit of a heat pump, comprising such a refrigerant leakage detection sensor.

### BACKGROUND

Document EP 3396261 A1 describes an indoor unit of an air-conditioning apparatus including: a casing; a drain pan, which is provided inside the casing, and is configured to receive condensate water generated in the load-side heat exchanger; and a refrigerant detection unit 99 provided below the drain pan inside the casing. The refrigerant detection unit 99 includes: a sensor 200 configured to detect leakage of the refrigerant; and a sensor cover 230 configured to cover the sensor 200 from a front surface side of the sensor. The sensor cover 230 includes: a roof portion 231 arranged above the sensor; and a side surface portion 232 arranged on the front surface side or a side surface side of the sensor below the roof portion 231. The roof portion has an eaves portion projecting outward with respect to the side surface portion, and a plurality of opening ports 234a, 234b, 234c configured to introduce air to the inside of the sensor cover 230 are provided in the side surface portion(s) 232. Each of the opening ports 234a, 234b, and 234c has a slit-like opening.

The opening ports 234a, 234b, and 234c are provided so that air or gas can easily glow through the cover 230 in order to ensure a reliably detection of a gas leakage without a delay in time. However, providing the opening ports 234a, 234b, and 234c, which allow air or gas to circulate through the cover 230, inevitably leads to an exposure of the sensor 230, in particular of the printed circuit board 210 (PCB), to condensed water and moisture form the humidity in the air. Leading to a low durability of the sensor 200 and the printed circuit board 210, due to oxidation.

Moreover, as the sensor 200 is provided within the sensor cover 230, even though there are opening ports 234a, 234b, and 234c provided, the detection efficiency/reliability is reduced. Additionally, as surrounding air is continuously circulated through the opening ports 234a, 234b, 234c, dust may cover the ports over time, leading to a deterioration of the reliability of the detection of a gas leakage. Yet, since there is a steady airflow through the slits of the opening ports 234a, 234b, and 234c, there might be an unpleasant noise, which is particularly in case of indoor units undesired.

Other related art may be found in JP 3 587 326 B describing a detection sensor 1 comprising a sensor casing, a circuit board 3 enclosed by the sensor casing 12 and a gas sensor mounted on the circuit board, the gas sensor having a housing a refrigerant reception area at an end of the housing allowing gaseous refrigerant to enter the housing and a sensing element in the housing, in EP 3 214 386 directed to an indoor unit including a casing, an indoor heat exchanger provided in the casing, a refrigerant gas sensor detachably attached to the sensor mounting portion; and a regulating member which is configured to regulate detachment of the refrigerant gas sensor in a detaching direction of the refrigerant gas sensor, when the casing is open, and WO 2019/013049 A1 disclosing an indoor unit for air conditioner comprising a refrigerant detection sensor.

### SUMMARY

In view of the above, there is the desire to provide a refrigerant leakage detection sensor for a heat pump allowing an improved detection efficiency/accuracy and detection reliability, while avoiding contact with moisture from air and condensed water, thereby improving durability of the detection sensor.

This aim may be achieved by a refrigerant leakage detection sensor for a heat pump as defined in claim 1 and an air conditioning apparatus, in particular an indoor unit of a heat pump, including such a refrigerant leakage detection sensor as defined in claim 15. Embodiments may be found in the dependent claims, the following description and the accompanying drawings.

According to a first aspect of the present disclosure, a refrigerant leakage detection sensor for a heat pump includes a sensor casing, a circuit board enclosed by the sensor casing, and a gas sensor mounted on the circuit board. The gas sensor has a housing, a refrigerant reception area at an end of the housing allowing gaseous refrigerant to enter the housing and a sensing element in the housing, wherein the housing protrudes through an opening in the sensor casing so that the refrigerant reception area is arranged outside the sensor casing and the sensing element is positioned inside the sensor casing.

Since the refrigerant reception area of the gas sensor is provided outside the sensor casing and the sensing element is positioned inside the sensor casing, it becomes possible to provide a refrigerant leakage detection sensor capable of allowing an improved detection efficiency/accuracy and detection reliability, while avoiding contact of the sensing element with moisture from air and condensed water, thereby improving durability of the detection sensor.

Moreover, by the claimed arrangement it becomes possible that most part of the housing of the gas sensor is covered by the sensor casing, ensuring that most part of the housing does not come into direct contact with moisture and water. Additionally, as most part of the gas sensor is located inside the sensor casing, the heat generated by the gas sensor during operation is almost fully kept inside the sensor casing, leading to a so called "thermal capsule" or "thermal pocket" covering the gas sensor, in particular the circuit board of the gas sensor. Moreover, the "thermal capsule" or "thermal pocket" leads to the advantage that the temperature in the vicinity of the sensor becomes higher, reducing the humidity surrounding the sensor. Yet, as the refrigerant reception area is outside the sensor casing, meaning in direct contact with the surrounding air, detection sensitivity and detection reliability can be enhanced.

Additionally, the term "refrigerant reception area" concerning the "gas sensor" defines in the present disclosure that the housing of the gas sensor, in particular the end or top of the housing is provided with an area or surface that allows refrigerant, in particular gaseous refrigerant, to penetrate the reception area and thereby enter the housing of the gas sensor. In this way the refrigerant reception area makes it possible that on one hand gaseous refrigerant can enter the housing and thereby reach the sensing element arranged inside the housing, on the other hand the refrigerant reception area prevents moisture and water, in particular condensed water, to enter the housing. In other words, the refrigerant reception area, which is preferably a membrane, is impermeable to liquids like moisture and water but permeable to air. Alternatively, the refrigerant reception area could include an upper layer made of a silica filter and a lower layer made of active charcoal.

Furthermore, the term "sensor element" defines in the present disclosure any means that is able to detect a physical parameter like temperature, pressure or humidity or resistance, particularly the existence of a gaseous refrigerant (gas sensor).

According to a further aspect of the present disclosure, the sensor casing may have a mounting surface for mounting the sensor casing to a structural element, wherein the opening is provided in a first wall, preferably a bottom wall, of the sensor casing and the housing of the gas sensor protrudes toward the mounting surface.

Moreover, the sensor casing may include legs connecting the sensor casing to the mounting surface, whereby a passage having opposite open ends is formed below the first wall and between the legs.

In this way it become possible to provide a sensor casing having a passage or space through which the surround air of the sensor casing can easily flow, particularly flow by the refrigerant reception are of the gas sensor. Accordingly, gaseous refrigerant can move more freely around the sensor casing and get easier in contact with the gas sensor. Hence, a faster and more efficient detection of leaked refrigerant can be achieved.

Furthermore, a lip may be provided at a free edge of the outer circumference of the first wall, the lip protruding toward the mounting surface. In a standard mounting position of the refrigerant detection sensor, the lip of the first wall or a body of the sensor casing, protrudes downward, thereby, the lip helps to avoid any dripping water or condensed water to get into the sensor casing through the opening in the sensor casing or reach the refrigerant reception area. It ensures that dripping water falling on the top of the sensor casing only flows along the side wall of the casing downwards and does not soak towards the bottom wall of the sensor casing.

Additionally, a first portion of the first wall having the opening may be arranged further away from the mounting surface than a second portion of the first wall. In this way the overall height of the sensor housing is decreased in the area of the gas sensor, thereby reducing the space surrounding the gas sensor inside the sensor housing. As the surrounding space is reduced, the temperature inside the casing, particular close to the sensor element can be increased.

According to a further aspect of the present disclosure, the first portion of the first wall and the second portion of the first wall are connected by an inclined surface. By the inclined surface, surrounding air flowing through the passage below the bottom wall can more easily flow, enhancing the air circulation effect of the passage.

The refrigerant leakage detection sensor for a heat pump may further include a through hole that is provided in a second wall, preferably a side wall, of the sensor casing for passing an isolated electrical cable to be connected to the circuit board through the second wall, particularly in a sealed manner.

Moreover, the through hole in the second wall tapers toward the outside of the sensor casing. As the electrical cable is usually covered or isolated by a plastic tubing with tie wrap, the sealing effect between the through hole of the sensor casing and the electrical cable can be improved, thereby stopping moisture and condensed water to enter the inside of the sensor casing. In situations, where the refrigerant leakage detection sensor faces fast temperature variations, an additional sealing material / insulating element can be provided to improve the efficiency in creation of the thermal pocket.

According to a further aspect a socket or plug may be mounted on the circuit board for releasably connecting a plug or socket at an end of the isolated electrical cable, wherein the socket or plug on the circuit board is accommodated in the sensor casing, preferably on a side of the circuit board facing the first wall.

Additionally, the second wall having the through hole may be located closer to the second portion of the first wall than to the first portion of the first wall.

Moreover, the housing of the gas sensor may protrude through the opening in the sensor casing in a sealed manner. In this way it becomes possible to further stop moisture or condensed water to enter the sensor casing.

The sensor casing of the refrigerant leakage detection sensor may include a body and a lid detachably fixed to the body, wherein mating surfaces of the body and the lid overlap in a direction perpendicular to a fixation direction of the sensor casing, when fixing the lid to the body. As the mating surface of the lid surrounds the mating surface of the body at the outer circumference, the sealing of the sensor casing can be enhanced. Moreover, as in the standard mounting position of the refrigerant leakage detection sensor the outer mating surface of the lid reaches further down in the fixation direction then the inner mating surface of the body, in particular further down as the interface between the body and the lid, moisture and water are stopped entering the sensor casing.

Moreover, the corners of the sensor casing may be rounded, wherein a radius of curvature of the rounded corners preferably is at least 2mm. Thereby, it becomes possible to avoid any unpleasant whistling noise caused by air flowing around the sensor casing.

According to a further aspect of the present disclosure, the circuit board may be arranged in the sensor casing, preferably parallel to the first wall, further away from the first wall than from a third wall, preferably a top wall, opposite to the first wall.

Additionally, the sensor casing may be at least partly thermally insulated. The thermal insulation can be achieved by an insulation member, which in particular can be arranged on the top and bottom wall of the sensor casing. The insulation member can be made of an elastic material, for example polyethylene foam. Thereby, the thermal insulation of the sensor casing, in particular of the gas sensor, can be enhanced, thereby the temperature inside the sensor casing can be increased. As the temperature inside the sensor casing, in particular near the gas sensor, can be further increased, the possibility of moisture or humid air inside the sensor casing reaches the dew point, can be significantly reduced.

When an insulation member is provided, the insulation member is preferably provided with an opening, through which at least partially the housing of the gas sensor is protruding, in particular in a sealed manner. The sealing can be achieved by press-fitting the housing into the insulation member, particularly when the insulation member is formed of an elastic material.

Yet, according to a further aspect of the present disclosure, the casing is sealed, preferably airthight and/or waterthight.

The disclosure further provides an air conditioner apparatus, in particular an indoor unit of a heat pump, comprising the refrigerant leakage detection sensor as described above.

The refrigerant leakage detection sensor for a heat pump, can be used for the air conditioning apparatus, in particular the indoor unit of a heat pump. Therefore, the further features disclosed in connection with the above description of the refrigerant leakage detection sensor may also be applied to the air conditioning apparatus, in particular the indoor unit of a heat pump of the disclosure. The same applies vice versa for the air conditioner apparatus, in particular for the indoor unit of a heat pump.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings.
Fig. 1 is a schematic illustration showing a conventional refrigerant detection unit of an air-conditioning apparatus;
Fig. 2 is a schematic three-dimensional illustration of a refrigerant leakage detection sensor according to an aspect of the present invention;
Fig. 3 is a schematic sectional view of the refrigerant leakage detection sensor shown in Fig. 2;
Fig. 4 is a schematic three-dimensional illustration of the sectional view shown in Fig. 3;
Fig. 5 is a schematic sectional view of an isolated electric cable of a refrigerant leakage detection sensor according to an aspect of the present invention; and
Fig. 6 is a schematic three-dimensional illustration of a refrigerant leakage detection sensor according to another aspect of the present invention.

### DETAILED DESCRIPTION

Several embodiments of the present disclosure will now be explained with reference to the drawings. It will be apparent to those skilled in the field of air-conditioning apparatus from this disclosure that the following description of the embodiments is provided for illustration only and not for the purpose of limiting the disclosure as defined by the appended claims.

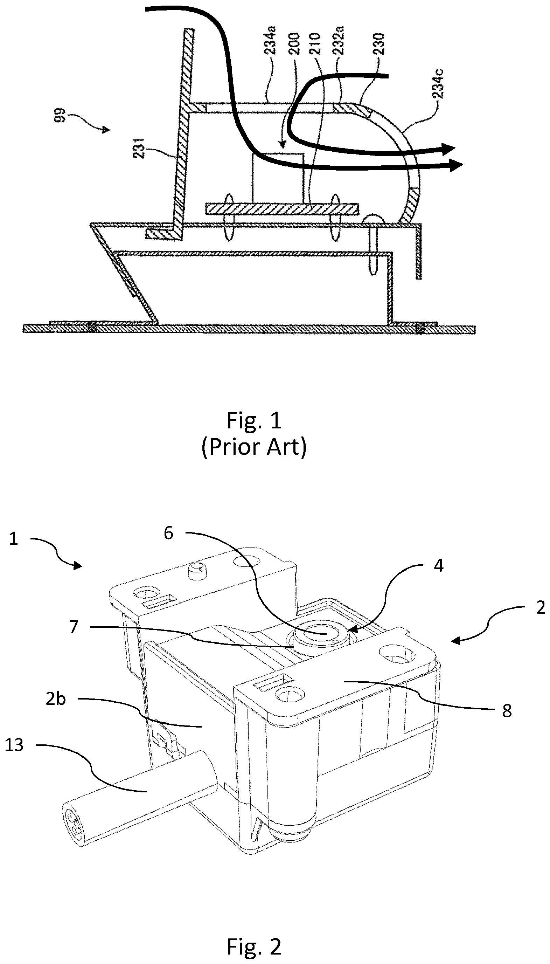

Figure 1 is a schematic illustration showing a conventional refrigerant detection unit 99 of an air-conditioning apparatus. As illustrated in Fig. 1, the refrigerant detection unit 99 includes a sensor 200, a mount plate, and a sensor cover 230. The mount plate is arranged on the back surface side of the sensor 200. The sensor cover 230 covers the sensor 200 from the front surface side and surrounds the sensor 200 together with the mount plate. The sensor 200 includes a sensor device and a board 210, the board 210 is configured to accommodate the sensor device therein. As also shown in Figure 1, the sensor cover 230 includes a roof portion 231, a side surface portion 232 and a bottom surface portion. The side surface portion 232 includes a front surface portion 232a, a right side surface portion and a left side surface portion. Moreover, a plurality of opening ports 234a, 234c configured to introduce air to the inside of the sensor cover 230 therethrough are formed in the front, side and bottom surface portion so as to ensure detectability for a leaking refrigerant.

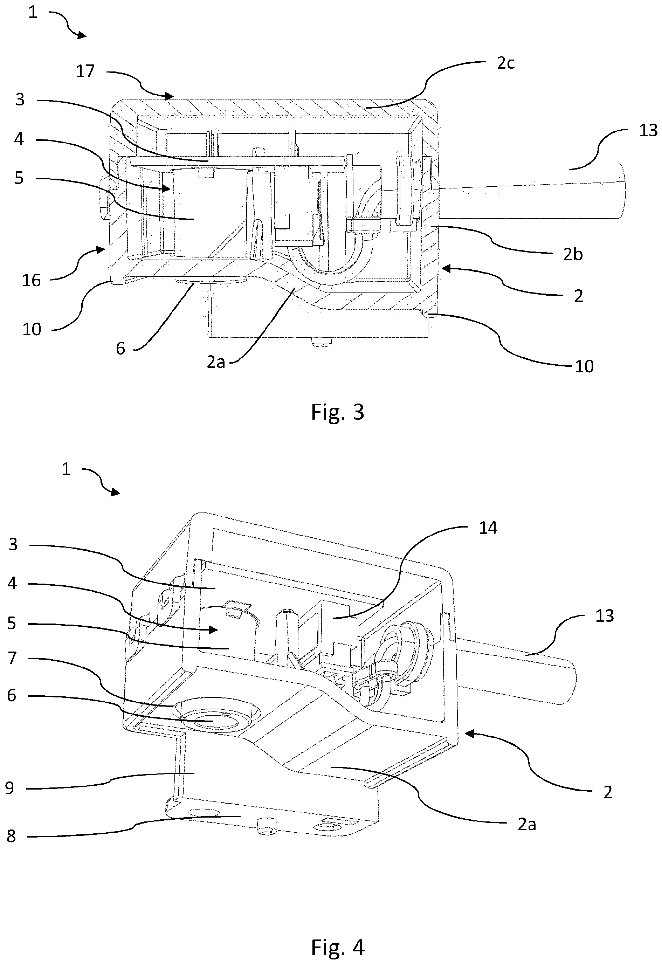

Figure 2 is a schematic three-dimensional illustration of a refrigerant leakage detection sensor 1 according to an aspect of the present invention. As Figure 2 shows, the refrigerant leakage detection sensor 1 includes a sensor casing 2, a circuit board 3 (shown in Fig. 3) and a gas sensor 4. The gas sensor 4 has a housing 5, which can be seen in more detail in Fig. 3, and a refrigerant reception area 6, which is located at the end of the housing 5, e.g. on the top of the housing. The refrigerant reception area 6 is configured to allow gaseous refrigerant to enter the housing 5. In this way, it is possible that gaseous refrigerant enters the housing 5 and thereby reaches a sensing element (not shown) which is located inside the housing 5.

As can also be taken from Figure 2, the gas sensor 4, in particular the housing 5 is protruding through an opening 7 arranged in the sensor casing 2 in such a manner that the refrigerant reception area is arranged outside the sensor casing 2. On the other hand, the sensing element (not shown), which is located inside the housing 5, is positioned inside the sensor casing 2.

Moreover, in order to better show the location of the gas sensor 4 within the sensor casing 2, the refrigerant leakage detection sensor 1 is shown in Figure 2 upside down. Meaning, a mounting surface 8 that is used for mounting the sensor casing 2 to an external structural element, is shown on top of the sensor casing 2. However, generally, the mounting surface 8 is positioned below the sensor casing. In other words, in an usual mounting situation of the refrigerant leakage detection sensor 1, the sensor is rotated by 180 degrees, as shown in Figure 3.

Figure 3 is a schematic sectional view of the refrigerant leakage detection sensor 1 shown in Fig. 2. By providing a sectional view of the sensor 1, it becomes possible to see the arrangement of the gas sensor 4 and related elements within the sensor casing 2. As shown in Figure 3, the sensor casing 2 comprises a body 16, which is in the standard mounting position of the sensor the lower part of the sensor casing 2, and a lid 17. The lid 17 is detachably fixed to the body 16, wherein mating surfaces of the body 16 and the lid 17 overlap in a direction perpendicular to a fixation direction. In Figure 3, the fixation direction is vertical, hence, the mating surfaces of the body 16 and the lid 17 overlap in the horizontal plane.

In the refrigerant detection sensor 1 shown in Figure 3, the mating surface of the lid 17 is arranged outside of the mating surface of the body 16, meaning the mating surface of the lid 17 surrounds the mating surface of the body 16, in particular over the entire outer circumference.

The circuit board 3 of the gas sensor 4 is arranged inside the sensor casing 2 and parallel to a first wall 2a of the sensor casing 2. In the standard mounting position of the sensor 1 shown in Figure 3, the first wall 2a is a bottom wall of the sensor casing 2 and is located on the side of the mounting surface 8. The first wall 2a is provided with an opening 7, through which the housing 5 of the gas sensor 2 protrudes toward the mounting surface 8.

Moreover, as shown in Figures 2 and 4, the sensor casing 2 is provided with two legs 9 connecting the sensor casing 2 with the mounting surface 8. In other words, the mounting surface (s) 8 is/are provided at the end surface of the legs 9. The legs 9 are arranged in such a manner that between the two legs 9 and the first wall 2a a passage having opposite open ends is formed.

As can also be taken from Figures 3 and 4, the sensor casing 2, in particular the body 16, is provided at a free edge of the outer circumference of the first wall 2a, which is part of the body 16, a lip 10. The lip 10 is formed in such a way that it protrudes toward the mounting surface 8.

Figure 3 also shows that the circuit board 3 is arranged in the sensor casing 2 parallel to the first wall 2a and further away from the first wall 2a than from a third wall 2c, which is in standard mounting position of the sensor 1 shown in Figure 3 a top wall, opposite to the first wall 2a.

Figure 4 is a schematic three-dimensional illustration of the sectional view shown in Figure 3. As can be taken from Figure 4 (and also Fig. 3), a first portion of the first wall 2a, in Figure 4 the left portion of the first wall 2a, is arranged further away from the mounting surface than a second portion of the first wall 2a, in Figure 4 the right portion of the first wall 2a. Accordingly, the overall height of the sensor casing 2 is reduced on the side of the sensor casing 2, where the gas sensor 3 is located. As also shown in Figure 4, the first portion of the first wall 2a and the second portion of the first wall 2a are connected by an inclined surface, which is accordingly arranged in the middle of the first wall 2a.

The sensor casing 2 of the refrigerant detection sensor 1 shown in Figures 2 to 4 is also provided with a through hole 12, which is located in a second wall 2b of the sensor casing 2, which is a side wall of the sensor casing 2. The through hole 12 is needed for passing an isolated electrical cable 13 into the sensor casing 2. In the embodiment shown in Figures 2 to 5, the isolated electrical cable 13 is provided at the one end, which is located inside the sensor casing 2, with a plug 15 that is insertable into a socket 14, which is mounted on the circuit board 3, so that the isolated electrical cable 13 can be connected to the circuit board 3.

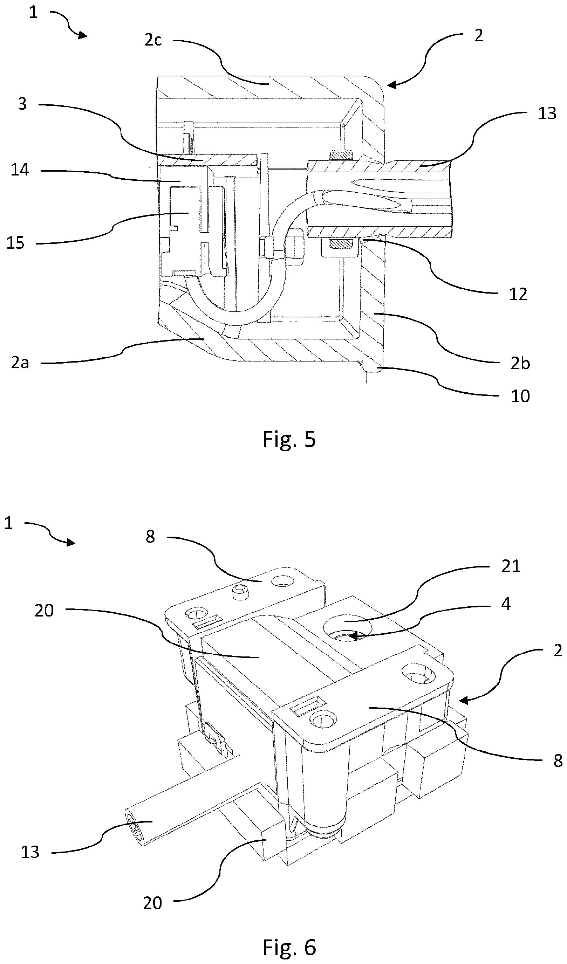

Figure 5 is a schematic sectional view showing the isolated electric cable 13 of the refrigerant leakage detection sensor 1 enlarged. As can be seen in Figure 5, the through hole 12 in the second wall 2b of the sensor casing 2 is formed in such a way that it tapers toward the outside of the sensor casing 2. Moreover, it is advantageous if the isolated electrical cable 13 is passed through the through hole 12 in a sealed manner. Figure 5 also shows that the socket 14 is accommodated on the circuit board 3 on a side of the circuit board 3 facing the first wall / bottom wall 2a. Yet, as particularly shown in Figure 4, the second wall 2b having the through hole 12 is located closer to the second portion of the first wall (2a) than to the first portion of the first wall (2a).

Figure 6 is a schematic three-dimensional illustration of a refrigerant leakage detection sensor 1 according to another aspect of the present invention. The shown refrigerant leakage detection sensor 1 basically corresponds to the refrigerant leakage detection sensor 1 described with regard to Figures 2 to 5, except that the in Figure 6 shown sensor 1 additionally is provided with an insulation member 20, which partially thermally insulates the sensor casing 2.

The insulation member 20 is provided with an opening 21, through which the housing 5 of the gas sensor 4 partially protrudes. In the shown embodiment it is preferred that the housing 5 protrudes through the opening 21 in a sealed manner, making it possible that the housing 5 can protrude through the opening 7 of the sensor casing 2 with clearance, in particular in a not sealed manner. The sealing between the insulation member 20 and the housing 5 of the gas sensor 4 can be achieved by a press-fitting, which is particularly advantageous or easy to realize in case the insulation member 20 is made of an elastic material like polyethylene foam.

### REFERENCE LIST

- 1: Refrigerant leakage detection sensor
- 2: Sensor casing
- 2a: Fist wall (bottom wall)
- 2b: Second wall (side wall)
- 2c: Third wall (top wall)
- 3: Circuit board (PCB)
- 4: Gas sensor
- 5: Housing (of gas sensor)
- 6: Refrigerant reception area
- 7: Opening (in the sensor casing)
- 8: Mounting surface(s)
- 9: Legs
- 10: Lip(s)
- 12: Through hole (in side wall)
- 13: Isolated electric cable
- 14: Socket or plug
- 15: Plug or Socket
- 16: Body
- 17: Lid
- 20: Insulating member
- 21: Opening (in insulating member)

## Claims

1. Refrigerant leakage detection sensor (1) for a heat pump, comprising:
a sensor casing (2);
a circuit board (3) enclosed by the sensor casing (2); and
a gas sensor (4) mounted on the circuit board (3), the gas sensor (4) having a housing (5), a sensing element located inside the housing (5), and a refrigerant reception area (6) at an end of the housing (5) configured to allow gaseous refrigerant to enter the housing (5) and thereby reach the sensing element inside the housing (5), wherein the housing (5) protrudes through an opening (7) in the sensor casing (2) so that the refrigerant reception area (6) is arranged outside the sensor casing (2) and is arranged so as to directly contact with the surrounding air and wherein the sensing element located inside the housing (5) is positioned inside the sensor casing (2).

2. Refrigerant leakage detection sensor (1) according to claim 1, wherein the sensor casing (2) has a mounting surface (8) for mounting the sensor casing (2) to a structural element, wherein the opening (7) is provided in a first wall (2a), preferably a bottom wall, of the sensor casing (2) and the housing (5) of the gas sensor (4) protrudes toward the mounting surface (8).

3. Refrigerant leakage detection sensor (1) according to claim 2, wherein the sensor casing (2) comprises legs (9) connecting the sensor casing (2) to the mounting surface (8), whereby a passage having opposite open ends is formed below the first wall (2a) and between the legs (9).

4. Refrigerant leakage detection sensor (1) according to claim 2 or 3, wherein a lip (10) is provided at a free edge of the outer circumference of the first wall (2a), the lip (10) protruding toward the mounting surface (8).

5. Refrigerant leakage detection sensor (1) according to any one of claims 2 to 4, wherein a first portion of the first wall (2a) having the opening (7) is arranged further away from the mounting surface than a second portion of the first wall (2a).

6. Refrigerant leakage detection sensor (1) according to claim 5, wherein the first portion of the first wall (2a) and the second portion of the first wall (2a) are connected by an inclined surface.

7. Refrigerant leakage detection sensor (1) according to any one of the preceding claims, wherein a through hole (12) is provided in a second wall (2b), preferably a side wall, of the sensor casing (2) for passing an isolated electrical cable (13) to be connected to the circuit board through the second wall (2b), particularly in a sealed manner.

8. Refrigerant leakage detection sensor (1) according to claim 7, wherein the through hole (12) in the second wall (2b) tapers toward the outside of the sensor casing (2).

9. Refrigerant leakage detection sensor (1) according to claim 7 or 8, wherein a socket (14) or plug is mounted on the circuit board (3) for releasably connecting a plug (15) or socket at an end of the isolated electrical cable (14), wherein the socket (14) or plug on the circuit board (3) is accommodated in the sensor casing (2), preferably on a side of the circuit board (3) facing the first wall (2a).

10. Refrigerant leakage detection sensor (1) according to any one of claims 7 to 9 and any one of claims 5 and 6, wherein the second wall (2b) having the through hole (12) is located closer to the second portion of the first wall (2a) than to the first portion of the first wall (2a).

11. Refrigerant leakage detection sensor (1) according to any one of the preceding claims, wherein the housing (5) of the gas sensor (4) protrudes through the opening (7) in the sensor casing (2) in a sealed manner.

12. Refrigerant leakage detection sensor (1) according to any one of the preceding claims, wherein the sensor casing (2) comprises a body (16) and a lid (17) detachably fixed to the body (16), wherein mating surfaces of the body (16) and the lid (17) overlap in a direction perpendicular to a fixation direction.

13. Refrigerant leakage detection sensor (1) according to any one of the preceding claims, wherein the circuit board (3) is arranged in the sensor casing (2), preferably parallel to the first wall (2a), further away from the first wall (2a) than from a third wall (2c), preferably a top wall, opposite to the first wall (2a).

14. Refrigerant leakage detection sensor (1) according to any one of the preceding claims, wherein the sensor casing (2) is at least partly thermally insulated, in particular by an insulation member (20).

15. Air conditioner apparatus, in particular indoor unit of a heat pump, comprising a refrigerant leakage detection sensor (1) according to any one of the preceding claims.

## Patentansprüche

1. Kältemittelleckage-Erkennungssensor (1) für eine Wärmepumpe, umfassend:
ein Sensorgehäuse (2);
eine Leiterplatte (3), die von dem Sensorgehäuse (2) umschlossen ist; und
einen Gassensor (4), der auf der Leiterplatte (3) montiert ist, wobei der Gassensor (4) ein Gehäuse (5), ein im Inneren des Gehäuses (5) befindliches Sensorelement und einen Kältemittelaufnahmebereich (6) an einem Ende des Gehäuses (5) aufweist, der konfiguriert ist zum Ermöglichen, dass gasförmiges Kältemittel in das Gehäuse (5) eintritt und dadurch das Sensorelement im Inneren des Gehäuses (5) erreicht, wobei das Gehäuse (5) durch eine Öffnung (7) in dem Sensorgehäuse (2) vorsteht, so dass der Kältemittelaufnahmebereich (6) außerhalb des Sensorgehäuses (2) angeordnet ist und so angeordnet ist, dass er in direktem Kontakt mit der Umgebungsluft steht, und wobei das Sensorelement, das sich im Inneren des Gehäuses (5) befindet, im Inneren des Sensorgehäuses (2) positioniert ist.

2. Kältemittelleckage-Erkennungssensor (1) nach Anspruch 1, wobei das Sensorgehäuse (2) eine Montagefläche (8) zur Montage des Sensorgehäuses (2) an einem strukturellen Element aufweist, wobei die Öffnung (7) in einer ersten Wand (2a), bevorzugt einer unteren Wand, des Sensorgehäuses (2) vorgesehen ist und das Gehäuse (5) des Gassensors (4) in Richtung der Montagefläche (8) vorsteht.

3. Kältemittelleckage-Erkennungssensor (1) nach Anspruch 2, wobei das Sensorgehäuse (2) Schenkel (9) umfasst, die das Sensorgehäuse (2) mit der Montagefläche (8) verbinden, wodurch unterhalb der ersten Wand (2a) und zwischen den Schenkeln (9) ein Durchgang mit gegenüberliegenden offenen Enden ausgebildet ist.

4. Kältemittelleckage-Erkennungssensor (1) nach Anspruch 2 oder 3, wobei eine Lippe (10) an einem freien Rand des Außenumfangs der ersten Wand (2a) vorgesehen ist, wobei die Lippe (10) in Richtung der Montagefläche (8) vorsteht.

5. Kältemittelleckage-Erkennungssensor (1) nach einem der Ansprüche 2 bis 4, wobei ein erster Abschnitt der ersten Wand (2a) mit der Öffnung (7) weiter von der Montagefläche entfernt angeordnet ist als ein zweiter Abschnitt der ersten Wand (2a).

6. Kältemittelleckage-Erkennungssensor (1) nach Anspruch 5, wobei der erste Abschnitt der ersten Wand (2a) und der zweite Abschnitt der ersten Wand (2a) durch eine schräge Fläche verbunden sind.

7. Kältemittelleckage-Erkennungssensor (1) nach einem der vorstehenden Ansprüche, wobei in einer zweiten Wand (2b), vorzugsweise einer Seitenwand, des Sensorgehäuses (2) ein Durchgangsloch (12) vorgesehen ist, um ein mit der Leiterplatte zu verbindendes isoliertes elektrisches Kabel (13) durch die zweite Wand (2b), insbesondere auf abgedichtete Weise, hindurchzuführen.

8. Kältemittelleckage-Erkennungssensor (1) nach Anspruch 7, wobei sich das Durchgangsloch (12) in der zweiten Wand (2b) in Richtung der Außenseite des Sensorgehäuses (2) verjüngt.

9. Kältemittelleckage-Erkennungssensor (1) nach Anspruch 7 oder 8, wobei eine Buchse (14) oder ein Stecker auf der Leiterplatte (3) montiert ist, um einen Stecker (15) oder eine Buchse an einem Ende des isolierten elektrischen Kabels (14) lösbar anzuschließen, wobei die Buchse (14) oder der Stecker auf der Leiterplatte (3) in dem Sensorgehäuse (2) untergebracht ist, bevorzugt auf einer Seite der Leiterplatte (3), die der ersten Wand (2a) zugewandt ist.

10. Kältemittelleckage-Erkennungssensor (1) nach einem der Ansprüche 7 bis 9 und nach einem der Ansprüche 5 und 6, wobei sich die zweite Wand (2b) mit dem Durchgangsloch (12) näher an dem zweiten Abschnitt der ersten Wand (2a) als an dem ersten Abschnitt der ersten Wand (2a) befindet.

11. Kältemittelleckage-Erkennungssensor (1) nach einem der vorstehenden Ansprüche, wobei das Gehäuse (5) des Gassensors (4) auf abgedichtete Weise durch die Öffnung (7) in dem Sensorgehäuse (2) vorsteht.

12. Kältemittelleckage-Erkennungssensor (1) nach einem der vorstehenden Ansprüche, wobei das Sensorgehäuse (2) einen Körper (16) und einen an dem Körper (16) lösbar befestigten Deckel (17) umfasst, wobei sich zusammenpassende Oberflächen des Körpers (16) und des Deckels (17) in einer Richtung senkrecht zu einer Befestigungsrichtung überlappen.

13. Kältemittelleckage-Erkennungssensor (1) nach einem der vorstehenden Ansprüche, wobei die Leiterplatte (3) in dem Sensorgehäuse (2), bevorzugt parallel zu der ersten Wand (2a), weiter von der ersten Wand (2a) entfernt angeordnet ist als von einer dritten Wand (2c), vorzugsweise einer oberen Wand, die der ersten Wand (2a) gegenüberliegt.

14. Kältemittelleckage-Erkennungssensor (1) nach einem der vorstehenden Ansprüche, wobei das Sensorgehäuse (2) zumindest teilweise thermisch isoliert ist, insbesondere durch ein Isolierelement (20).

15. Klimaanlagenvorrichtung, insbesondere Inneneinheit einer Wärmepumpe, umfassend einen Kältemittelleckage-Erkennungssensor (1) nach einem der vorstehenden Ansprüche.

## Revendications

1. Capteur (1) de détection de fuite de réfrigérant pour une pompe à chaleur, comprenant :
un boîtier (2) de capteur ;
une carte (3) à circuit imprimé enfermée par le boîtier (2) de capteur ; et
un capteur (4) de gaz monté sur la carte (3) à circuit imprimé, le capteur (4) de gaz présentant un logement (5), un élément de détection situé à l'intérieur du logement (5), et une zone (6) de réception de réfrigérant au niveau d'une extrémité du logement (5) configurée pour permettre au réfrigérant gazeux d'entrer dans le logement (5) et d'atteindre ainsi l'élément de détection à l'intérieur du logement (5), dans lequel le logement (5) fait saillie à travers une ouverture (7) dans le boîtier (2) de capteur de telle sorte que la zone (6) de réception de réfrigérant est agencée à l'extérieur du boîtier (2) de capteur et est agencée de manière à être en contact direct avec l'air environnant et dans lequel l'élément de détection situé à l'intérieur du logement (5) est positionné à l'intérieur du boîtier (2) de capteur.

2. Capteur (1) de détection de fuite de réfrigérant selon la revendication 1, dans lequel le boîtier (2) de capteur présente une surface (8) de montage pour le montage du boîtier (2) de capteur sur un élément structural, dans lequel l'ouverture (7) est disposée dans une première paroi (2a), de préférence une paroi de fond, du boîtier (2) de capteur et le logement (5) du capteur (4) de gaz fait saillie vers la surface (8) de montage.

3. Capteur (1) de détection de fuite de réfrigérant selon la revendication 2, dans lequel le boîtier (2) de capteur comprend des pieds (9) reliant le boîtier (2) de capteur à la surface (8) de montage, selon lequel un passage présentant des extrémités ouvertes opposées est formé sous la première paroi (2a) et entre les pieds (9).

4. Capteur (1) de détection de fuite de réfrigérant selon la revendication 2 ou revendication 3, dans lequel un rebord (10) est disposé au niveau d'un bord libre de la circonférence extérieure de la première paroi (2a), le rebord (10) faisant saillie vers la surface (8) de montage.

5. Capteur (1) de détection de fuite de réfrigérant selon l'une quelconque des revendications 2 à 4, dans lequel une première partie de la première paroi (2a) présentant l'ouverture (7) est agencée plus loin de la surface de montage qu'une seconde partie de la première paroi (2a).

6. Capteur (1) de détection de fuite de réfrigérant selon la revendication 5, dans lequel la première partie de la première paroi (2a) et la seconde partie de la première paroi (2a) sont reliées par une surface inclinée.

7. Capteur (1) de détection de fuite de réfrigérant selon l'une quelconque des revendications précédentes, dans lequel un trou traversant (12) est disposé dans une deuxième paroi (2b), de préférence une paroi latérale, du boîtier (2) de capteur pour faire passer un câble électrique isolé (13) à connecter à la carte à circuit imprimé à travers la deuxième paroi (2b), en particulier d'une manière étanche.

8. Capteur (1) de détection de fuite de réfrigérant selon la revendication 7, dans lequel le trou traversant (12) dans la deuxième paroi (2b) se resserre vers l'extérieur du boîtier (2) de capteur.

9. Capteur (1) de détection de fuite de réfrigérant selon la revendication 7 ou revendication 8, dans lequel une douille (14) ou fiche est montée sur la carte (3) à circuit imprimé pour connecter de manière amovible une fiche (15) ou douille au niveau d'une extrémité du câble électrique isolé (14), dans lequel la douille (14) ou fiche sur la carte (3) à circuit imprimé est accueillie dans le boîtier (2) de capteur, de préférence sur un côté de la carte (3) à circuit imprimé faisant face à la première paroi (2a).

10. Capteur (1) de détection de fuite de réfrigérant selon l'une quelconque des revendications 7 à 9 et selon l'une quelconque des revendications 5 et 6, dans lequel la deuxième paroi (2b) présentant le trou traversant (12) est située plus près de la seconde partie de la première paroi (2a) que de la première partie de la première paroi (2a).

11. Capteur (1) de détection de fuite de réfrigérant selon l'une quelconque des revendications précédentes, dans lequel le logement (5) du capteur (4) de gaz fait saillie à travers l'ouverture (7) dans le boîtier (2) de capteur d'une manière étanche.

12. Capteur (1) de détection de fuite de réfrigérant selon l'une quelconque des revendications précédentes, dans lequel le boîtier (2) de capteur comprend un corps (16) et un couvercle (17) fixé de manière détachable au corps (16), dans lequel des surfaces d'accouplement du corps (16) et du couvercle (17) se chevauchent dans une direction perpendiculaire à une direction de fixation.

13. Capteur (1) de détection de fuite de réfrigérant selon l'une quelconque des revendications précédentes, dans lequel la carte (3) à circuit imprimé est agencée dans le boîtier (2) de capteur, de préférence parallèlement à la première paroi (2a), plus loin de la première paroi (2a) que d'une troisième paroi (2c), de préférence une paroi supérieure, opposée à la première paroi (2a).

14. Capteur (1) de détection de fuite de réfrigérant selon l'une quelconque des revendications précédentes, dans lequel le boîtier (2) de capteur est au moins partiellement thermiquement isolé, en particulier par un élément d'isolation (20).

15. Appareil de climatisation, en particulier unité intérieure d'une pompe à chaleur, comprenant un capteur (1) de détection de fuite de réfrigérant selon l'une quelconque des revendications précédentes.
